# EUROPEAN PATENT SPECIFICATION

(11) **EP 4 322 503 B1**
(45) Date of publication and mention of the grant of the patent: **23.04.2025**
(21) Application number: 23190266.9
(22) Date of filing: 08.08.2023
(51) Int. Cl.: H04L 67/02, H04L 9/40

(54) **IDENTIFICATION OF A COMPUTING DEVICE DURING AUTHENTICATION**
IDENTIFIZIERUNG EINER RECHNERVORRICHTUNG WÄHREND DER AUTHENTIFIZIERUNG
IDENTIFICATION D'UN DISPOSITIF INFORMATIQUE PENDANT L'AUTHENTIFICATION

(30) Priority: 09.08.2022 US 202217884295
(43) Date of publication of application: 14.02.2024
(73) Proprietor: CrowdStrike, Inc., Sunnyvale, CA 94086 (US)
(72) Inventor: Simakov, Marina, Sunnyvale, 94086 (US); Karni, Eyal, Sunnyvale, 94086 (US); Zinar, Yaron, Sunnyvale, 94086 (US)
(74) Representative: Murgitroyd & Company

(56) References cited:
- US-A1- 2022 116 382
- US-A1- 2022 217 132

## Description

### BACKGROUND

Identity providers offer user authentication as a service. An authentication request to an identity provider is typically triggered when a user requests access to a resource. The identity provider may evaluate various types of data to assess the risk of the requested access, which is then used to determine whether to allow the request, deny the request, or, in some cases, prompt the user to authenticate using an additional factor. Common types of data evaluated during such an authentication process include user data, location data, and/or device data. User data may indicate an identity of the requesting user, which is typically embedded in a web request as a user identity. Location data may indicate a location from which the request originated, which is typically derived from the Internet Protocol (IP) address associated with the request. Device data is typically limited to the user agent string of a Hypertext Transfer Protocol Secure (HTTPS) request, or, in some cases, device data may be obtained by a software package (e.g., a browser extension) installed on, and configured to interoperate with a browser of, the computing device from which the request originated. US 2022/0116382 A1 relates to network controls for application access secured by transport layer security using single sign on flow. US 2022/0217132 A1 relates to operations which include transmitting, on behalf of a first application, a first request to a first service provider, the first request requesting first services from the first service provider, intercepting, at a local agent, a first redirect message from the first service provider to an identity provider.

### SUMMARY

The invention is defined by the appended claims.

Accordingly, there are provided methods and computer devices as defined in the claims.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 illustrates an example environment showing an example computing device, an example service provider, an example first identity provider, and an example second identity provider.
FIG. 2 illustrates an example process to be implemented by a computing device for providing data about the computing device to a first identity provider during authentication of a user of the computing device.
FIG. 3 illustrates an example process to be implemented by a second identity provider for providing data about a computing device to a first identity provider during authentication of a user of the computing device.
FIG. 4 illustrates another example process to be implemented by a second identity provider for providing data about a computing device to a first identity provider during authentication of a user of the computing device.

### DETAILED DESCRIPTION

Often times the identity of a computing device used in an authentication procedure is either not available to an identity provider or not reliable. The identity provider, during authentication of a user, typically evaluates location data derived from the IP address associated with the incoming request. However, location data derived from the IP address does not necessarily represent the actual location of the user. This allows an attacker to use a virtual private network (VPN), for example, to disguise their location. Furthermore, the identity provider may evaluate the user agent string of a HTTP header sent in a HTTPS session, but the user agent can also be spoofed by a malicious actor. Moreover, if a software package (e.g., a browser extension) is used to provide device data to the identity provider during authentication, a user is required to install the software package on potentially every browser of his/her computing device, and the device data that is sent to the identity provider using such a software package is limited.

This disclosure describes, in part, techniques and systems for enabling an identity provider to identify a computing device during authentication of a user of the computing device, and to do so in a manner that is independent of a browser and/or a client application and/or an operating system (OS) on the computing device. The techniques and systems described herein leverage a security agent executing on the computing device in combination with the capability of certain authentication protocols to redirect the authentication request to a second identity provider in order to retrieve and provide data about the computing device to a first identity provider during an authentication process (e.g., a web authentication process). Because the data about the computing device from which an authentication request originated can have a profound impact on the authentication of a user of the computing device, this data about the computing device enables the first identity provider to evaluate a security risk of the requested access with improved accuracy, as compared to existing technologies, and/or to apply one or more policies to the authentication request based on the security risk. Such policies may include, for example, triggering a multifactor authentication (MFA) procedure.

In an illustrative example, a user of a computing device may attempt to access a resource by opening a browser and entering a uniform resource locator (URL) of a service provider, or by opening a client application (e.g., an electronic mail (email) client) on the computing device. The resource can be a local resource that is stored on the computing device, or the resource can be a remote resource stored on an external system (e.g., a cloud application stored on a remote server). The act of the user requesting access to the resource may trigger an authentication process, which may involve the browser or the client application causing the computing device to send an authentication request (e.g., a web request) to a first identity provider.

In response to the computing device sending the authentication request to the first identity provider, the computing device may receive, from the first identity provider, redirection data to redirect the authentication request to a second identity provider. Upon receiving the redirection data, a security agent executing on the computing device may intercept the authentication request, retrieve data about the computing device (e.g., an identifier of the computing device), and send the authentication request with the device data (e.g., the identifier of the computing device) to the second identity provider. In this example, the computing device may receive, from the second identity provider, a signed response to the authentication request, wherein the signed response is signed with a private key accessible (e.g., exclusively accessible) to the second identity provider, and wherein the signed response includes the device data (e.g., the identifier of the computing device). The computing device may send the signed response to the first identity provider to receive a result of the authentication request from the first identity provider (e.g., receiving an indication that the access to the resource has been granted, denied, etc.).

An example process implemented by the second identity provider in the above example may include receiving an authentication request from a computing device to access a resource, wherein the authentication request was redirected to the second identity provider by a first identity provider, signing a response to the authentication request with a private key accessible (e.g., exclusively accessible) to the second identity provider, and sending the signed response to the computing device.

The techniques and systems described herein - for providing data about a computing device (e.g., an identifier of the computing device) to an identity provider during authentication of a user of the computing device - provide various technical benefits, such as by effecting an improvement upon a particular technology and/or allowing one or more devices to conserve resources with respect to processing resources, memory resources, networking resources, power resources, etc., in the various ways described herein.

For example, the techniques and systems described herein are independent of a browser and/or a client application and/or an OS of the computing device, whereas existing techniques for providing device data to an identity provider require a user to install a software package (e.g., a browser extension) on potentially every browser of his/her computing device. This means that, using the techniques and systems described herein, a user does not have to install a browser extension on potentially multiple separate browsers. Instead, the techniques and systems described herein leverage a security agent that is already installed, and running, on a computing device, making the techniques and systems described herein agnostic of the browser and/or the client application and/or the OS that may be exchanging data with the first identity provider.

As another example, the techniques and systems described herein strengthen the authentication process. This is, in part, due to enabling the first identity provider to easily obtain the data about the computing device (e.g., an identifier of the computing device), and to take this device data into account as an additional factor before granting the user access to a requested resource.

As another example, the techniques and systems described herein are more secure than existing solutions through tamper-resistance. For example, data about the computing device (e.g., an identifier of the computing device) is signed by the second identity provider using a private key accessible (e.g., exclusively accessible) to the second identity provider, which means that, if an attacker were to compromise the computing device, the attacker still cannot inject data into the signed response that is provided to the first identity provider without tampering with the computing device's security agent, which can have sophisticated anti-tampering mechanisms. These mechanisms are otherwise protected because the attacker cannot fake the signature of the second identity provider or modify claims added by the second identity provider. If an attacker were to compromise the browser and/or the client application of the computing device, the attacker still cannot fake the existence, or otherwise spoof an identifier, of a security agent installed on the computing device; the attacker would need the "secrets" used to create a secure tunneling mechanism between the security agent and the second identity provider to accomplish this type of attack, and the attacker is unable to obtain such "secrets." Even if an attacker had a copy of a signed response from a previous, authenticated session, the attacker could not effectively use such a copy of the signed response with the techniques and systems described herein, which, in some examples, includes adding a timestamp to the signed response from the second identity provider.

As another example, the techniques and systems described herein enable the first identity provider to use the direct trust relationship with the second identity provider in order to obtain information about the computing device's identity. In existing solutions that use browser extensions on user computing devices to provide an identity provider with device data, there is a greater risk of an attacker compromising the computing device by stealing the device data. By contrast, using the techniques and systems described herein, data about the computing device (e.g., an identifier of the computing device) is provided to the first identity provider in a signed response that was signed with a private key, wherein the private key is part of the trust relationship between the second identity provider and the first identity provider.

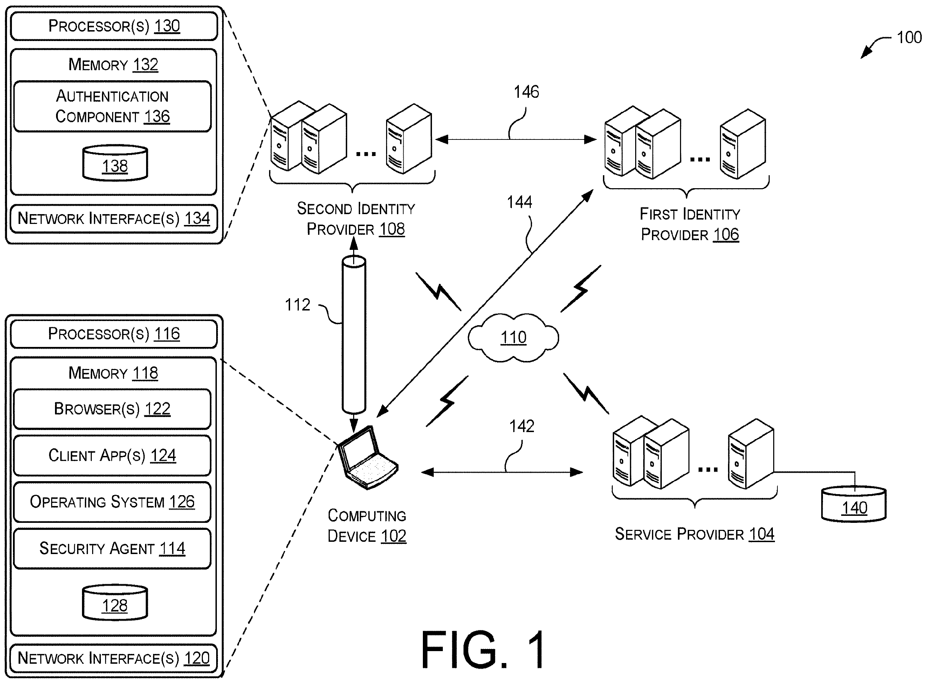

FIG. 1 illustrates an example environment 100 showing an example computing device 102, an example service provider 104, an example first identity provider 106, and an example second identity provider 108. As illustrated in FIG. 1, the computing device 102 may interact with the service provider 104, the first identity provider 106, and/or the second identity provider 108 over a network(s) 110. In some examples, the network(s) 110 may include any one or more networks, such as wired networks, wireless networks, and combinations of wired and wireless networks. Further, the network(s) 110 may include any one or combination of multiple different types of public or private networks (e.g., cable networks, the Internet, cellular networks, etc.). In some instances, at least the computing device 102, the first identity provider 106, and/or the second identity provider 108 are configured to communicate over the network 110 using a secure protocol or networking technology including, without limitation, Security Assertion Markup Language (SAML), OAuth, OpenID Connect, Web Services Federation (WS-Federation, or WS-Fed), PingFederate, Active Directory Federation Services (ADFS), HTTPS, and/or any other protocol or set of protocols or network technology, such as transmission control protocol/Internet protocol (TCP/IP). As will be described in further detail below, the security agent 114 and the second identity provider 108, in some examples, may establish a secure tunneling mechanism 112 to communicate with each other.

In various examples, the computing device 102 and one or more devices of the service provider 104, the first identity provider 106, and/or the second identity provider 108 may each be or include a server or server farm, multiple, distributed server farms, a mainframe, a work station, a personal computer (PC), a laptop computer, a tablet computer, a personal digital assistant (PDA), a cellular phone, a media center, an embedded system, or any other sort of device or devices. In one implementation, the device(s) of the second identity provider 108 represent a plurality of computing devices working in communication with each other, such as a cloud computing network of nodes. When implemented on multiple computing devices, the second identity provider 108 may distribute its modules, components, and/or data among the multiple computing devices of the second identity provider 108. In some implementations, one or more of the computing device 102, the service provider 104, the first identity provider 106, and/or the second identity provider 108 represents one or more virtual machines implemented on one or more computing devices.

The second identity provider 108 is sometimes referred to herein as an "external identity provider" 108 with respect to the first identity provider 106. In some examples, the second identity provider 108 is implemented as a cloud of security service devices, and may be referred to herein as a "remote security service" 108 or a "security service cloud" 108. It is to be appreciated that the second identity provider 108 may be configured to provide a security service to a large number of computing devices, such as the computing device 102. FIG. 1 shows a single computing device 102 merely for illustrative purposes, when in fact, the environment 100 can include many more computing devices like the computing device 102, each being configured to interact with the second identity provider 108. By way of example and not limitation, the second identity provider 108 may interact with many thousands of computing devices 102.

Each computing device, such as the computing device 102 (sometimes referred to herein as a "device" 102, "workstation" 102, "machine" 102, "host machine" 102, or "user device" 102), may implement a security agent 114, which is a security software program that executes on the computing device 102. The security agent 114 (sometimes referred to herein as an "agent" 114, "security software" 114, "sensor" 114, or "endpoint" 114) may execute in the kernel mode of the computing device 102, in some examples. During execution, the security agent 114 observes events, determines actions to take based on those events, and/or sends the events to the second identity provider 108 for further processing and analysis. In some examples, the security agent 114 of the computing device 102 may be configured with security features and functionality for detecting malware on the computing device 102. Accordingly, the second identity provider 108 may manage a fleet of security agents, such as the security agent 114, on a fleet of computing devices, such as the computing device 102, and the second identity provider 108 may assign a unique identifier to each installed security agent 114.

As shown in FIG. 1, the computing device 102 may include, among other components, one or more processors 116, memory 118, and one or more network interfaces 120. The memory 118 may store, among other things, one or more browsers 122 (e.g., Google Chrome^{®}, Microsoft Edge^{®}, Mozilla Firefox^{®}, Safari^{®}, etc.), one or more client applications 124 (e.g., an email client, such as Microsoft Outlook^{®}, Gmail^{®}, etc.), an operating system (OS) 126, as well as the aforementioned security agent 114. The memory 118 may also store various types of data 128, at least some of which may be usable by the security agent 114, the browser(s) 122, the client application(s) 124, and/or the OS 126.

FIG. 1 also shows that the second identity provider 108 may include, among other components, one or more processors 130, memory 132, and one or more network interfaces 134. The memory 132 may store, among other things, an authentication component 136 to implement the techniques described herein, as well as various types of data 138, at least some of which may be usable by the authentication component 136.

The processors 116, 130 may be or include any sort of processing unit, such as a central processing unit (CPU) or a graphic processing unit (GPU). The network interfaces 120, 134 configure the associated computing device to communicate with other computing devices in the environment 100 over the network(s) 110. The network interfaces 120, 134 may send and receive communications and/or data through one or both of the network 110 or other networks using any suitable protocol. The network interfaces 120, 134 may also support both wired and wireless connection to various networks.

The memories 118, 132 may store an array of modules and data, and may include volatile and/or nonvolatile memory, removable and/or non-removable media, and the like, which may be implemented in any method or technology for storage of information, such as computer-readable instructions, data structures, program modules, or other data. Such memory includes, but is not limited to, random access memory (RAM), read-only memory (ROM), electrically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, redundant array of independent disks (RAID) storage systems, or any other non-transitory computer-readable medium which can be used to store the desired information and which can be accessed by a computing device.

In some instances, the computing device 102 and/or the second identity provider 108 may have components, features, and/or functionality in addition to those illustrated in FIG. 1. Moreover, although not shown in FIG. 1, the first identity provider 106 and/or the service provider 104 may have similar components, features, and/or functionality to those of the second identity provider 108 illustrated in FIG. 1. In addition, some or all of the components, features, and/or functionality described as residing within any single device may reside remotely from that device, in some implementations.

The service provider 104 may represent any suitable type of service provider, such as an email service provider, an enterprise application service provider, or the like. Examples of service providers 104 include, without limitation, Office 365^{®}, Salesforce^{®}, or any other type of service provider 104 that maintains resources 140 (e.g., applications, virtual machines (VMs), etc.). A user of the computing device 102 may desire to access a resource(s) 140 of the service provider 104, and the service provider 104 may rely on the first identity provider 106 to manage identity information of requesting users and offer user authentication as a service.

The first identity providers 106 may be any suitable entity (e.g., a company, organization, etc.) and/or service providing entity thereof, including enterprise solutions, such as Okta, OneLogin, Azure Active Directory (Azure AD), etc. Accordingly, when a user of the computing device 102 logs into the service provider 104, the service provider 104 may redirect the incoming request to the first identity provider 106. In an illustrative example, a user of the computing device 102 may open the browser 122 and enter a URL associated with the service provider 104, which causes a request to access a resource(s) 140 of the service provider 104 to be sent from the computing device 102 to the service provider 104 along path 142. Alternatively, the user of the computing device 102 may open the client application 124 associated with the service provider 104, which causes a request to access a resource(s) 140 of the service provider 104 to be sent from the computing device 102 to the service provider 104 along path 142. The request transmitted along path 142 to the service provider 104 may trigger an authentication process, whereby the request is redirected to the first identity provider 106 as an authentication request sent from the computing device 102, via the browser 122 or the client application 124, to the first identity provider 106 along path 144. In some examples, the user may enter credentials (e.g., a username, a password, etc.) and/or the computing device 102 may provide a token to the first identity provider 106. In some examples, the authentication request sent to the first identity provider 106 along path 144 may include a user identity associated with the user of the computing device 102, an IP address associated with the computing device 102, a user agent, or the like.

In response to receiving the authentication request along path 144, the first identity provider 106 may redirect the authentication request to the second authentication provider 108. An example reason for redirecting the authentication request to the second authentication provider 108 is to allow the first identity provider 106 to obtain data about the computing device 102 (e.g., an identifier of the computing device 102) from which the authentication request originated. In some examples, the first identity provider 106 may send, to the computing device 102 along path 144, redirection data to redirect the authentication request to the second identity provider 108. In some examples, the redirection data sent to the computing device 102 along path 144 may include a URL managed by the second identity provider 108. In other words, the redirection of the authentication request to the second identity provider 108 can be in the form of a URL, such as "endpointID.externalidentityprovider.com," which is a fictitious example of a URL that might be managed by the second identity provider 108.

Consider an example where the computing device 102 does not have a security agent 114 installed thereon. In such an example, the browser 122 or the client application 124 is configured to navigate directly to the second identity provider 108 based at least in part on the redirection data (e.g., URL) received from the first identity provider 106 via path 144. It is worth noting that, in this example - where the computing device 102 does not have a security agent 114 installed thereon, the secure tunneling mechanism 112 between the computing device 102 and the second identity provider 108 is not established (e.g., does not exist). Nevertheless, the second identity provider 108 can still receive the redirected authentication request from the computing device 102, and, upon receiving the authentication request from the computing device 102, the second identity provider 108 may determine that the computing device 102 does not have a security agent 114 installed thereon. This determination can be made based on the second identity provider 108 receiving the authentication request without an identifier of a security agent 114, in one example. The second identity provider 108 may return a signed response to the computing device 102 indicating that a security agent 114 is not installed on the computing device 102. This indication may be in the form of a message specifying that the second identity provider 108 "does not know this machine," or any similar message indicating that a security agent 114 is not installed on the computing device 102. The computing device 102, upon receiving such a signed response from the second identity provider 108, may forward the signed response, via the browser 122 or the client application 124, to the first identity provider 106 along path 144. In this example, the first identity provider 106, upon receiving the signed response from the computing device 102 along path 144, determines that there is no security agent 114 installed on the computing device 102, and the first identity provider 106 can take this absence of a security agent 114 into account for determining a result of the authentication request. For example, the first identity provider 106 may deny access to the requested resource(s) 140 in part because the computing device 102 does not have a security agent 114 installed, and, in this scenario, the first identity provider 106 may provide an indication of the same to the computing device 102 along path 144. Alternatively, the lack of a security agent 114 on the computing device 102 may trigger a MFA procedure, in which case the user of the computing device 102 may be prompted for an additional factor (e.g., the user may be prompted to enter a code sent to the user out-of-band via Short Message Service (SMS) text).

In contrast to the above-described example, the example of FIG. 1 shows the computing device 102 as having a security agent 114 installed thereon. In this example, the computing device 102 may still receive redirection data from the first identity provider 106 along path 144, such as a URL (e.g., "endpointID.externalidentityprovider.com") managed by the second identity provider 108. However, in response to the browser 122 or the client application 124 receiving the redirection data from the first identity provider 106, the browser 122 or the client application 124 may be served locally on the computing device 102. For example, if a URL is received from the first identity provider 106 along path 144, the URL may, due to the presence of the security agent 114 on the computing device 102, resolve to a localhost associated with the computing device 102 such that the URL is served locally on the computing device 102. For example, the redirection may, in some cases, be made by using generic mechanisms, such as host file or domain name system (DNS) traffic redirection. This allows the security agent 114 to intercept the authentication request. Accordingly, the security agent 114 may intercept the authentication request, and may retrieve data about the computing device 102 after intercepting the authentication request. In some examples, the data about the computing device 102 retrieved by the security agent 114 includes an identifier of the computing device 102. In some examples, the identifier of the computing device 102 is an identifier of the security agent 114. In other words, the second identity provider 108 may use the unique identifier assigned to the security agent 114 installed on the computing device 102 as an identifier of the computing device 102 for purposes of implementing the techniques described herein. In some examples, the data about the computing device 102 retrieved by the security agent 114 includes additional data about the computing device 102 (e.g., data about the hardware, software, and/or firmware of the computing device 102), including data indicating, without limitation, a version of an OS 126 of the computing device 102, a compatibility of the computing device 102, a policy level of the security agent 114, user information about a user of the computing device 102, a strength of a password associated with the user, a location associated with the authentication request, proxy information associated with the authentication request, whether a security feature is enabled on the computing device 102, and/or whether the computing device 102 has been involved in a security incident.

A version of the OS 126 may be indicative of whether the computing device 102 is up-to-date or outdated. Linux, for example, is a member of the family of UNIX OS's, and may be run on a variety of computer platforms, including personal computers with an x86 processor. Linux is a free, open-ended implementation of UNIX, and source code for a Linux kernel is available to the public, and is continuously being improved and otherwise modified. As improvements and/or other alterations to the Linux kernel are made and generally adopted by the public, new Linux versions are released. Regardless of the type of OS 126, two OS versions (e.g., kernel versions) may be different in various ways. For example, one version of an OS 126 may have additional modules that are not in another version. As another example, modules of respective OS versions may perform the same task(s) but in different ways. These and/or other differences may cause the existence of multiple OS versions.

A compatibility of the computing device 102 may indicate the computing device's 102 ability to accept input from a newer version of itself (e.g., by ignoring unknown tags and references that the newer version will have). In some examples, a compatibility of the computing device 102 may include the hardware compatibility (e.g., the compatibility of the computer hardware components with a particular CPU architecture, bus, motherboard, or OS 126). In some examples, a compatibility of the computing device 102 may include software compatibility (e.g., the ability of certain software that runs on other models of a family of computer models to be run on the particular model of the computing device 102).

A policy level of the security agent 114 may be indicative of the security agent's 114 approach to malware. In some examples, the policy level can represent the security configuration and/or security settings of the computing device 102. In an illustrative example, a first policy level of the security agent 114 may be to strictly detect malware without taking any action. A second policy level of the security agent 114 may be to detect and report malware to the second identity provider 108. A third policy level of the security agent 114 may be to detect, report, and/or automatically block the detected malware.

User information about a user of the computing device 102 may include an Active Directory group membership, for example.

A strength of a password associated with the user of the computing device may be measured by any suitable metric, such as a number of different types of characters (e.g., letters of the alphabet, symbols, numbers, etc.), a length of the password, a randomness of the password, or the like.

A location associated with the authentication request may represent a location from which the authentication request originated. In some examples, the location can be any suitable type of location information, such as Global Positioning System (GPS) coordinates, a civic address, or any other suitable type of location information.

Proxy information associated with the authentication request may include any suitable proxy information, such as an IP address used as a proxy for a location.

A security feature of the computing device 102 that may be enabled or disabled may include features such as secure boot, or other features to "harden" the computing device 102 against malware attacks. Security incidents may include detections of malware on the computing device 102, detections of attempts of attackers to compromise the computing device 102, or the like.

It is worth noting that, in the example of FIG. 1, the security agent 114 may be granted permissions that are sufficient for retrieving the data about the computing device 102 from the computing device 102, yet the security agent 114 may be unable to serve the authentication request by itself (e.g., without the assistance of the second identity provider 108). This is at least because the authentication request may be encrypted and protected, such as by Transport Layer Security (TLS), and the security agent 114 is not configured to decrypt the authentication request, and having the private key used to by the second identity provider 108 accessible to the computing device 102 (e.g., stored on the computing device 102) may provide an opportunity for an attacker to steal the private key and impersonate the second identity provider 108, potentially allowing the attacker to gain access to the requested resource(s) illicitly. Thus, making the private key used by the second identity provider 108 inaccessible to the security agent 114, and to the computing device 102 generally, may provide improved security. In other words, the second identity provider 108 may have exclusive access to the private key that is used to sign a response to the first identity provider 106, which may be due to the second identity provider 108 being a trusted entity who can sign response (or the data contained in the response).

After intercepting the authentication request and retrieving the data about the computing device 102 (e.g., from the data 128), the security agent 114 may act as a proxy between the browser 122 or the client application 124 and the second identity provider 108. Based on the preexisting trust relationship between the security agent 114 and the second identity provider 108, the secure tunneling mechanism 112 depicted in FIG. 1 may be established (or created) to exchange data between the security agent 114 and the second identity provider 108, in some examples. In these examples, the security agent 114 may send the authentication request with the retrieved data about the computing device 102 (e.g., the identifier of the computing device 102) to the second identity provider 108 using (e.g., inside) the secure tunneling mechanism 112. Alternatively, the computing device 102 may send the authentication request with the retrieved data about the computing device 102 (e.g., the identifier of the computing device 102) to the second identity provider 108 using an unencrypted part of a TCP session, or by opening an independent channel. These example techniques allow for sending the authentication request (with the retrieved data about the computing device 102) to the second identity provider 108 without having to decrypt and encrypt the authentication request.

The second identity provider 108, upon receiving, from the computing device 102, the authentication request with the data about the computing device 102 may, in some examples, validate the data about the computing device 102. For example, the second identity provider 108 may confirm that the identifier of the computing device 102 received via the secure tunneling mechanism 112 is one of a plurality of identifiers associated with security agents that have been installed on computing devices 102. The second identity provider 108 may sign a response to the authentication request with a private key accessible (e.g., exclusively accessible) to the second identity provider 108. Signing the response, as used herein may include signing the response and/or the data contained in the response. For example, the response signed by the second identity provider 108 may include the data about the computing device 102 (e.g., the identifier of the computing device 102) that was retrieved by the security agent 114, and the second identity provider 108 may sign the response (e.g., by signing the identifier of the computing device 102 contained in the response). In some examples, the second identity provider 108 may retrieve additional data about the computing device 102 (e.g., data about the hardware, software, and/or firmware of the computing device 102) that was not retrieved by the security agent 114 and include the additional data in the signed response. Such additional data retrieved by the second identity provider 108 may indicate, without limitation, a version of an OS 126 of the computing device 102, a compatibility of the computing device 102, a policy level of the security agent 114, user information about a user of the computing device 102, a strength of a password associated with the user, a location associated with the authentication request, proxy information associated with the authentication request, whether a security feature is enabled on the computing device 102, and/or whether the computing device 102 has been involved in a security incident. The second identity provider 108 may have such data 138 available in the memory 132 due to past interactions between the second identity provider 108 and the security agent 114 of the computing device 102.

The second identity provider 108 may send, to the computing device 102 (e.g., using the secure tunneling mechanism 112), the signed response including the data about the computing device 102 (e.g., the identifier of the computing device 102). Including the identifier of the computing device 102 (e.g., an identifier of the security agent 114) in the signed response may indicate that a known security agent 114 is installed on the computing device 102. This could be in the form of a message specifying that the second identity provider 108 "knows this machine," or any similar message. The computing device 102, upon receiving such a signed response from the second identity provider 108, may forward the signed response, via the browser 122 or the client application 124, to the first identity provider 106 along path 144. In this example, the first identity provider 106, upon receiving the signed response from the computing device 102 along path 144, may extract the data (e.g., the identifier of the computing device 102) from the signed response, and the first identity provider 106 can take this extracted data about the computing device 102 into account in determining a result of the authentication request. For example, the first identity provider 106 may grant access to the requested resource(s) 140 in part because the computing device 102 has a security agent 114 installed thereon, and the first identity provider 106 may provide an indication of the same to the computing device 102 along path 144. In some examples, the result of the authentication request is determined by the first identity provider 106 applying one or more policies. The policy(ies) applied by the first identity provider 106 may be based on the data contained, or not contained, in a signed response received from the computing device 102 via path 144 (and possibly based on additional data received directly from the second identity provider 108 via path 146). Example policies applied by the first identity provider 106 include, without limitation, granting access to the requested resource(s) 140, denying access to the requested resource(s) 140, triggering a MFA procedure (e.g., a MFA prompt) that prompts the user for an additional factor, and/or indicating a risk level associated with the request to the service provider 104 to cause the service provider 104 to restrict access to at least some of its resources 140 based on the risk level, such as by denying access to the requested resource(s) 140 while granting access to another resource(s) 140 that is perhaps less sensitive than the requested resource(s) 140. These types of policies may be communicated back to the computing device 102 as indications of a result of the authentication request.

As mentioned above, in some instances, the computing device 102, the first identity provider 106, and/or the second identity provider 108 are configured to utilize any suitable federation service(s), such as, without limitation, PingFederate, ADFS, and/or any other federation service. Additionally, or alternatively, in some examples, the computing device 102, the first identity provider 106, and/or the second identity provider 108 are configured to communicate over the network(s) 110 using a secure protocol or networking technology including, without limitation, SAML, OAuth, OpenID Connect, WS-Fed, HTTPS, and/or any other protocol or set of protocols or network technology, such as the TCP/IP. In examples where SAML protocol is used, the authentication request may be sent by the computing device 102 (e.g., with data about the computing device 102) to the second identity provider 108 (e.g., via the secure tunneling mechanism 112) using SAML protocol, and, in these examples, the second identity provider 108 may act as a SAML claims provider. That is, the second identity provider 108 may be configured to sign a response to the authentication request by including one or more signed SAML claims in the response sent back to the computing device 102 (e.g., via the secure tunneling mechanism 112). For example, the second identity provider 108 may embed the identifier of the computing device 102 in the response as a signed SAML claim, and may send the response including the signed SAML claim(s) to the computing device 102. It is to be appreciated that, if a computing device 102 does not have a security agent 114 installed thereon, the signed response received from the second identity provider 108 may not include any SAML claims. In general, the use of SAML protocol in the techniques described herein may prevent a malicious "machine-in-the-middle" from tampering with the SAML claim(s) provided in the response from the second identity provider 108. The techniques and systems using SAML, as described herein, may also protect against malware attempting to modify the SAML claim(s) if a computing device 102 is compromised, since the SAML claims calculation is not done on the computing device 102, but rather on an independent, remote, second identity provider 108. In some examples, the signed response sent by the second identity provider 108 to the computing device 102 may include a timestamp indicating a time at which the second identity provider 108 signed the response with the private key. This timestamp may prevent an attacker from effectively using a copy of a signed response from a previous, authenticated session, thereby improving the security of the authentication process.

When the browser 122 or the client application 124 forwards the signed response to the first identity provider 106 along path 144, it is to be appreciated that the browser 122 or the client application 124 does not have visibility into the use of the secure tunneling mechanism 112 to exchange data between the computing device 102 (e.g., via the security agent 114) and the second identity provider 108. In other words, from the perspective of the browser 122 or the client application 124, an authentication request was redirected to the second identity provider 108 using a secure protocol (e.g., SAML), and a signed response (e.g., a response with signed SAML claims) was received from the second identity provider 108 using the secure protocol. Meanwhile, if the second identity provider 108 receives a redirected authentication request from the computing device 102 via the secure tunneling mechanism 112, the second identity provider 108 can safely assume that the redirected authentication request (and any data about the computing device 102 sent therewith) was not sent by the browser 122 or the client application 124.

In some examples, as depicted in FIG. 1, a "cloud-to-cloud" path 146 may allow the first identity provider 106 and the second identity provider 108 to communicate directly with each other "out-of-band", before, during, and/or after the authentication process with respect to a user of the computing device 102, as described herein. For example, the second identity provider 108 may receive, from the first identity provider 106, one or more queries along path 146 for additional data about the computing device 102 (e.g., data about the hardware, software, and/or firmware of the computing device 102) that was not already retrieved by the security agent 114 or by the second identity provider 108. In some examples, the first identity provider 106 may send a query to the second identity provider 108 using data about the computing device 102 (e.g., the identifier of the computing device 102) that the first identity provider 106 received "in-band" from the computing device 102 along path 144. In response to the query(ies) sent to the second identity provider 108 along path 146, the second identity provider 108 may send the additional data to the first identity provider 106 along path 146. Such additional data may indicate, without limitation, a version of an OS 126 of the computing device 102, a compatibility of the computing device 102, a policy level of the security agent 114, user information about a user of the computing device 102, a strength of a password associated with the user, a location associated with the authentication request, proxy information associated with the authentication request, whether a security feature is enabled on the computing device 102, and/or whether the computing device 102 has been involved in a security incident. The second identity provider 108 may have such data 138 available in the memory 132 due to past interactions between the second identity provider 108 and the security agent 114 of the computing device 102.

The processes described herein are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

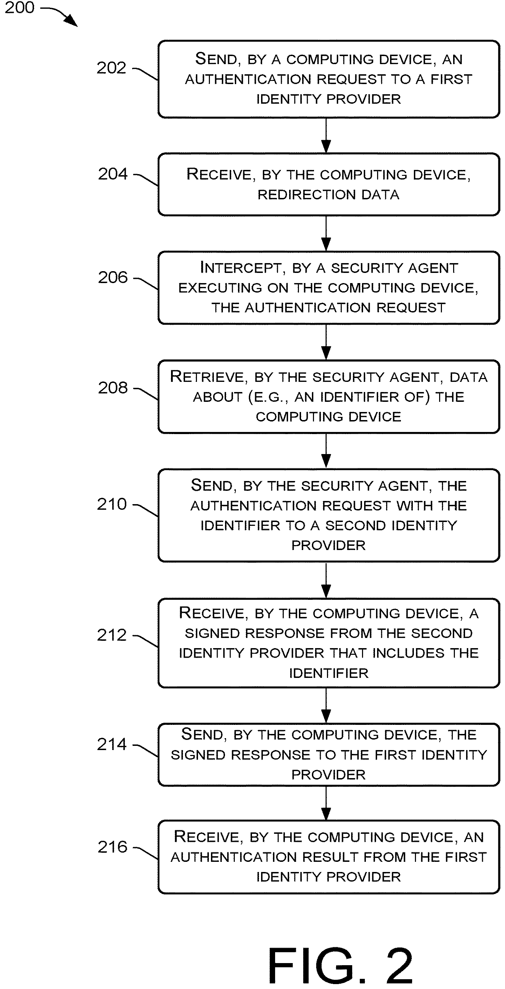

FIG. 2 illustrates an example process 200 to be implemented by a computing device 102 for providing data about the computing device 102 to a first identity provider 106 during authentication of a user of the computing device 102. By way of example, and not limitation, the process 200 is described with reference to the previous figures.

At 202, a computing device 102 may send, to a first identity provider 106, an authentication request to access a resource 140 (e.g., a cloud application). A service provider 104 may restrict access to the resource 140 to authenticated users, and, as such, the first identity provider 106 may handle such user authentication on behalf of the service provider 104. In some examples, the user may have opened a browser 122 or a client application 124 on the computing device 102 and entered a URL associated with the service provider 104 in order to access the resource 140, which ultimately caused the authentication request to be send along path 144 to the first identity provider 106 at block 202.

At 204, the computing device 102 may receive, from the first identity provider 106, redirection data to redirect the authentication request to a second identity provider 108. In some examples, the redirection data includes a URL managed by the second identity provider 108.

At 206, a security agent 114 executing on the computing device 102 may intercept (or capture) the authentication request. In some examples, the intercepting the authentication request at block 206 by the security agent 114 is based at least in part on the URL included in the redirection data resolving to a localhost associated with the computing device 102, which may be in response to a browser 122 of the computing device 102 being directed to the URL included in the redirection data.

At 208, the security agent 114 may retrieve data about the computing device 102, such as an identifier of the computing device 102 and/or additional data besides the identifier. In some examples, the identifier of the computing device 102 is an identifier of the security agent 114. In some examples, additional data besides the identifier that is retrieved by the security agent 114 at block 208 indicates, without limitation, a version of an OS 126 of the computing device 102, a compatibility of the computing device 102, a policy level of the security agent 114, user information about a user of the computing device 102, a strength of a password associated with the user, a location associated with the authentication request, proxy information associated with the authentication request, whether a security feature is enabled on the computing device 102, and/or whether the computing device 102 has been involved in a security incident.

At 210, the security agent 114 of the computing device 102 may send the authentication request with the data (e.g., the identifier of the computing device 102) retrieved at block 208 to the second identity provider 108. For example, the computing device 102 may inject the data retrieved at block 208 into the authentication request before sending the authentication request to the second identity provider 108 at block 210. In some examples, the sending of the authentication request with the data (e.g., the identifier of the computing device 102) to the second identity provider 108 at block 210 includes sending the authentication request with the identifier of the computing device 102 using a secure tunneling mechanism 112 between the security agent 114 and the second identity provider 108. In some examples, the authentication request is sent with the data (e.g., the identifier of the computing device 102) to the second identity provider 108 using SAML protocol, or another secure protocol.

At 212, the computing device 102 may receive, from the second identity provider 108, a signed response to the authentication request, wherein the signed response is signed with a private key accessible to the second identity provider 108, and wherein the signed response includes the data (e.g., the identifier of the computing device 102) retrieved at block 208. In some examples, the receiving the signed response from the second identity provider 108 includes receiving the signed response using the secure tunneling mechanism 112. In some examples, the signed response includes additional data about the computing device 102 retrieved by the second identity provider 108. In some examples, the signed response includes a signed SAML claim(s). In some examples, the signed response includes a timestamp indicating a time at which the second identity provider 108 signed the response with the private key.

At 214, the computing device 102 may send the signed response to the first identity provider 106. In some examples the signed response is sent to the first identity provider 106 along path 144 in FIG. 1 using SAML protocol, or another secure protocol.

At 216, the computing device 102 may receive a result of the authentication request from the first identity provider 106. In some examples, receiving the result of the authentication request from the first identity provider 106 at block 216 includes at least one of: receiving an indication that access to the resource 140 has been granted; receiving an indication that access to the resource 140 has been denied; receiving a MFA prompt; and/or receiving an indication that access to the resource 140 has been denied, and that access to another resource 140 has been granted.

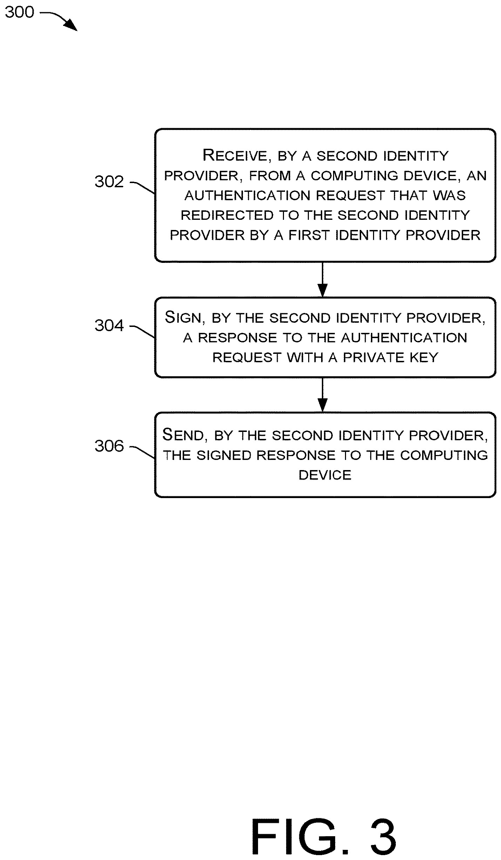

FIG. 3 illustrates an example process 300 to be implemented by a second identity provider 108 for providing data about a computing device 102 to a first identity provider 106 during authentication of a user of the computing device 102. By way of example, and not limitation, the process 300 is described with reference to the previous figures.

At 302, a second identity provider 108 may receive, from a computing device 102, an authentication request, wherein the authentication request was redirected to the second identity provider 108 by a first identity provider 106. In some example, the second identity provider 108 may not know which resource(s) 140 is/are being requested with the authentication request received at block 302. In other examples, the authentication request received at block 302 may be a request to access a particular resource(s) 140, such that the requested resource(s) 140 is known to the second identity provider 108.

At 304, the second identity provider 108 may sign a response to the authentication request with a private key accessible to the second identity provider 108. In some examples, the signed response includes an indication as to whether a security agent 114 managed by the second identity provider 108 is or is not installed on the computing device 108.

At 306, the second identity provider 108 may send the signed response to the computing device 102. In some examples, SAML protocol, or another secure protocol is used to receive the authentication request at block 302 and/or to send the signed response at block 306.

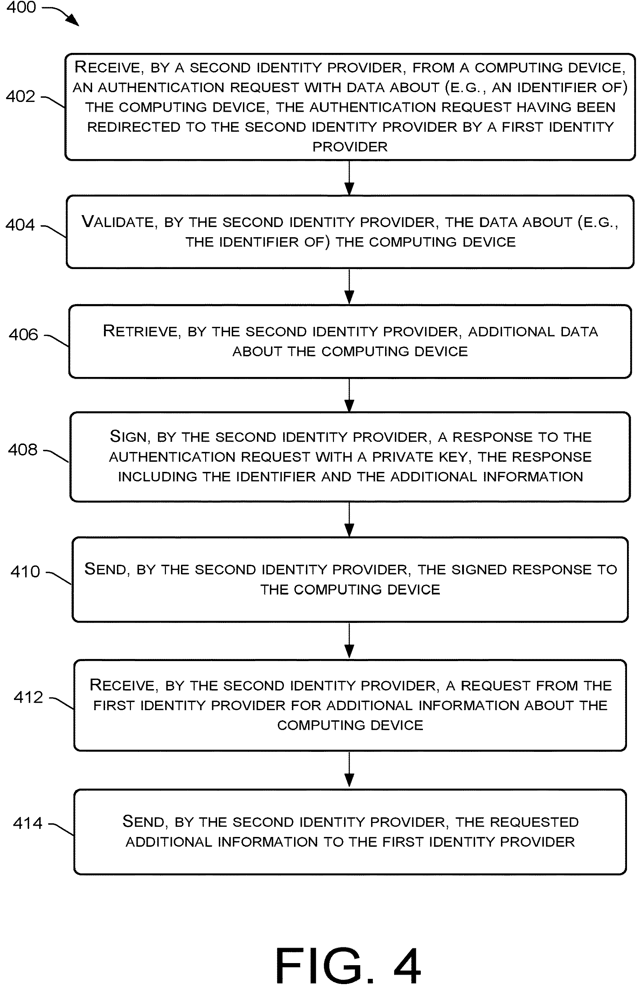

FIG. 4 illustrates another example process 400 to be implemented by a second identity provider 108 for providing data about a computing device 102 to a first identity provider 106 during authentication of a user of the computing device 102. By way of example, and not limitation, the process 400 is described with reference to the previous figures.

At 402, a second identity provider 108 may receive, from a computing device 102, an authentication request with data about a computing device 102 (e.g., an identifier of the computing device 102). In some example, the second identity provider 108 may not know which resource(s) 140 is/are being requested with the authentication request received at block 402. In other examples, the authentication request received at block 402 may be a request to access a particular resource(s) 140, such that the requested resource(s) 140 is known to the second identity provider 108. In some examples, the authentication request may have been redirected to the second identity provider 108 by a first identity provider 106. In some examples, the authentication request is received at block 402 via a security agent 114 executing on the computing device 102. In some examples, the receiving of the authentication request at block 402 with the identifier of the computing device 102 includes receiving the authentication request with the identifier of the computing device 102 using a secure tunneling mechanism 112 between the security agent 114 and the second identity provider 108. In some examples, the identifier of the computing device 102 comprises an identifier of the security agent 114.

At 404, the second identity provider 108 may validate the data about a computing device 102. For example, the validating at block 404 may include validating the identifier of the computing device 102 by confirming that the identifier is one of a plurality of identifiers associated with security agents that have been installed on computing devices. Moreover, the confirmation of the security agent may be done by validating the secure channel 112 established by the trust relationship between the security agent 114 and the second identity provider 108.

At 406, the second identity provider 108 may retrieve additional data about the computing device 102, such as additional data that indicates, without limitation, a version of an OS 126 of the computing device 102, a compatibility of the computing device 102, a policy level of the security agent 114, user information about a user of the computing device 102, a strength of a password associated with the user, a location associated with the authentication request, proxy information associated with the authentication request, whether a security feature is enabled on the computing device 102, and/or whether the computing device 102 has been involved in a security incident.

At 408, the second identity provider 108 may sign a response to the authentication request with a private key accessible to the second identity provider 108. The signed response may include the data received with the authentication request at block 402, such as the identifier of the computing device 102, and/or the signed response may include the additional data retrieved by the second identity provider 108 at block 406.

At 410, the second identity provider 108 may send, to the computing device 102, the signed response. In some examples, the sending of the signed response to the computing device 102 at block 410 includes sending the signed response using the secure tunneling mechanism 112.

At 412, the second identity provider 108 may receive (e.g., directly via path 146 of FIG. 1) a query from the first identity provider 106 for additional data about the computing device 102. In some examples, the additional data indicates, without limitation, a version of an OS 126 of the computing device 102, a compatibility of the computing device 102, a policy level of the security agent 114, user information about a user of the computing device 102, a strength of a password associated with the user, a location associated with the authentication request, proxy information associated with the authentication request, whether a security feature is enabled on the computing device 102, and/or whether the computing device 102 has been involved in a security incident.

At 414, the second identity provider 108 may send the additional data to the first identity provider 106. This allows the first identity provider 106 to receive the additional data about the computing device 102 "out-of-band" along path 146 of FIG. 1.

### CONCLUSION

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method comprising:
sending, by a computing device, an authentication request to a first identity provider (106);
receiving, by the computing device, from the first identity provider, redirection data to redirect the authentication request to a second identity provider (108);
when the computing device has a security agent (114) installed,
intercepting, by a security agent (114) executing on the computing device (102), the authentication request;
retrieving, by the security agent, an identifier of the computing device;
sending, by the security agent, the authentication request with the identifier of the computing device to the second identity provider;
receiving, by the computing device, from the second identity provider, a signed response to the authentication request, wherein the signed response includes the identifier of the computing device;
when the computing device does not have a security agent (114) installed, sending, by the computing device, the authentication request to the second identity provider; receiving, by the computing device, from the second identity provider, a signed response to the authentication request;
sending, by the computing device, the signed response to the first identity provider; and
receiving, by the computing device, a result of the authentication request from the first identity provider;
wherein the signed response includes an indication that a security agent managed by the second identity provider is not installed on the computing device, or,
wherein the authentication request is sent via a security agent executing on the computing device for validating the identifier by confirming at the second identity provider (108) that the identifier is one of a plurality of identifiers associated with security agents that have been installed on computing devices.

2. The method of claim 1, wherein the identifier of the computing device comprises an identifier of the security agent.

3. The method of claim 1 or 2, wherein:
the redirection data comprises a uniform resource locator, URL, managed by the second identity provider;
in response to a browser of the computing device being directed to the URL, the URL resolves to a localhost associated with the computing device; and
wherein the intercepting the authentication request by the security agent is based at least in part on the URL resolving to the localhost.

4. The method of any preceding claim, further comprising:
retrieving, by the security agent, additional data about the computing device; and
sending, by the security agent, the authentication request with the additional data to the second identity provider,
wherein the additional data indicates at least one of:
a version of an operating system, OS, of the computing device;
a compatibility of the computing device;
a policy level of the security agent;
user information about a user of the computing device;
a strength of a password associated with the user;
a location associated with the authentication request;
proxy information associated with the authentication request;
whether a security feature is enabled on the computing device; or
whether the computing device has been involved in a security incident.

5. The method of any preceding claim, wherein:
the sending the authentication request with the identifier of the computing device to the second identity provider comprises sending the authentication request with the identifier of the computing device using a secure tunneling mechanism (112) between the security agent and the second identity provider; and
the receiving the signed response from the second identity provider comprises receiving the signed response using the secure tunneling mechanism.

6. The method of claim 1, wherein the signed response includes additional data about the computing device retrieved by the second identity provider.

7. The method of any preceding claim, wherein:
the authentication request is sent with the identifier of the computing device to the second identity provider using Security Assertion Markup Language, SAML, protocol; and
the signed response includes a signed SAML claim.

8. The method of any preceding claim, wherein the signed response includes a timestamp indicating a time at which the second identity provider signed the signed response with a private key accessible to the second identity provider.

9. The method of any preceding claim, wherein receiving the result of the authentication request from the first identity provider comprises at least one of:
receiving an indication that access to a resource has been granted;
receiving an indication that access to the resource has been denied;
receiving a multifactor authentication prompt; or
receiving an indication that access to the resource has been denied, and that access to another resource has been granted.

10. A computing device comprising:
one or more processors; and
memory storing computer-executable instruction that, when executed by the one or more processors, cause the computing device to carry out the method of any preceding claim.

11. A method comprising:
receiving, by a second identity provider (108), an authentication request from a computing device (102), wherein the authentication request was redirected to the second identity provider by a first identity provider (106);
signing, by the second identity provider, a response to the authentication request to obtain a signed response; and
sending, by the second identity provider, the signed response to the computing device;
wherein when the authentication request is received without an identifier of the computing device the signed response includes an indication that a security agent (114) managed by the second identity provider is not installed on the computing device, or, wherein:
the authentication request is received with an identifier of the computing device;
the authentication request is received via a security agent executing on the computing device;
the method further comprises validating the identifier by confirming that the identifier is one of a plurality of identifiers associated with security agents that have been installed on computing devices; and
the signed response includes the identifier of the computing device.

12. The method of claim 11, wherein the identifier of the computing device comprises an identifier of the security agent, or
wherein:
the receiving the authentication request with the identifier of the computing device from the computing device comprises receiving the authentication request with the identifier of the computing device using a secure tunneling mechanism (112) between the security agent (114) and the second identity provider; and
the sending the signed response to the computing device comprises sending the signed response using the secure tunneling mechanism (112).

13. The method of any one of claims 11 to 12, further comprising:
receiving, by the second identity provider, a query from the first identity provider for additional data about the computing device; and
sending, by the second identity provider, the additional data to the first identity provider,
wherein the additional data indicates at least one of:
a version of an operating system, OS, of the computing device;
a compatibility of the computing device;
a policy level of the security agent;
user information about a user of the computing device;
a strength of a password associated with the user;
a location associated with the authentication request;
proxy information associated with the authentication request;
whether a security feature is enabled on the computing device; or
whether the computing device has been involved in a security incident.

14. A computer comprising:
one or more processors; and
memory storing computer-executable instruction that, when executed by the one or more processors, cause the computing device to carry out the method of any one of claims 11 to 13.

## Patentansprüche

1. Ein Verfahren, das Folgendes beinhaltet:
Senden, durch eine Rechenvorrichtung, einer Authentifizierungsanfrage an einen ersten Identitäts-Provider (106);
Empfangen, durch die Rechenvorrichtung von dem ersten Identitäts-Provider, von Weiterleitungsdaten, um die Authentifizierungsanfrage an einen zweiten Identitäts-Provider (108) weiterzuleiten;
wenn auf der Rechenvorrichtung ein Security-Agent (114) installiert ist,
Abfangen, durch einen Security-Agent (114), der auf der Rechenvorrichtung (102) ausgeführt wird, der Authentifizierungsanfrage;
Abrufen, durch den Security-Agent, einer Kennung der Rechenvorrichtung; Senden, durch den Security-Agent, der Authentifizierungsanfrage mit der Kennung der Rechenvorrichtung an den zweiten Identitäts-Provider; Empfangen, durch die Rechenvorrichtung von dem zweiten Identitäts-Provider, einer signierten Antwort auf die Authentifizierungsanfrage, wobei die signierte Antwort die Kennung der Rechenvorrichtung umfasst;
wenn auf der Rechenvorrichtung kein Security-Agent (114) installiert ist,
Senden, durch die Rechenvorrichtung, der Authentifizierungsanfrage an den zweiten Identitäts-Provider;
Empfangen, durch die Rechenvorrichtung von dem zweiten Identitäts-Provider, einer signierten Antwort auf die Authentifizierungsanfrage;
Senden, durch die Rechenvorrichtung, der signierten Antwort an den ersten Identitäts-Provider; und
Empfangen, durch die Rechenvorrichtung, eines Ergebnisses der Authentifizierungsanfrage von dem ersten Identitäts-Provider;
wobei die signierte Antwort eine Angabe umfasst, dass ein Security-Agent, der durch den zweiten Identitäts-Provider verwaltet wird, auf der Rechenvorrichtung nicht installiert ist, oder
wobei die Authentifizierungsanfrage via einen Security-Agent, der auf der Rechenvorrichtung ausgeführt wird, gesendet wird, um die Kennung zu validieren,
indem an dem zweiten Identitäts-Provider (108) bestätigt wird, dass die Kennung eine einer Vielzahl von Kennungen ist, die mit Security-Agents assoziiert sind, die auf Rechenvorrichtungen installiert wurden.

2. Verfahren gemäß Anspruch 1, wobei die Kennung der Rechenvorrichtung eine Kennung des Security-Agent beinhaltet.

3. Verfahren gemäß Anspruch 1 oder 2, wobei:
die Weiterleitungsdaten einen einheitlichen Ressourcenzeiger (URL) beinhalten, der durch den zweiten Identitäts-Provider verwaltet wird;
als Reaktion darauf, dass ein Browser der Rechenvorrichtung zu dem URL geleitet wird, der URL zu einem mit der Rechenvorrichtung assoziierten Localhost aufgelöst wird; und
wobei das Abfangen der Authentifizierungsanfrage durch den Security-Agent mindestens teilweise darauf basiert, dass der URL zu dem Localhost aufgelöst wird.

4. Verfahren gemäß einem der vorhergehenden Ansprüche, das ferner Folgendes beinhaltet:
Abrufen, durch den Security-Agent, zusätzlicher Daten über die Rechenvorrichtung; und
Senden, durch den Security-Agent, der Authentifizierungsanfrage mit den zusätzlichen Daten an den zweiten Identitäts-Provider,
wobei die zusätzlichen Daten mindestens eines von Folgendem angeben:
eine Version eines Betriebssystems, OS, der Rechenvorrichtung;
eine Kompatibilität der Rechenvorrichtung;
eine Richtlinienebene des Security-Agent;
Benutzerinformationen über einen Benutzer der Rechenvorrichtung;
eine Stärke eines mit dem Benutzer assoziierten Passworts;
einen mit der Authentifizierungsanfrage assoziierten Standort;
mit der Authentifizierungsanfrage assoziierte Proxy-Informationen;
ob ein Sicherheitsmerkmal auf der Rechenvorrichtung aktiviert ist; oder
ob die Rechenvorrichtung mit einem Sicherheitsvorfall in Zusammenhang stand.

5. Verfahren gemäß einem der vorhergehenden Ansprüche, wobei:
das Senden der Authentifizierungsanfrage mit der Kennung der Rechenvorrichtung an den zweiten Identitäts-Provider das Senden der Authentifizierungsanfrage mit der Kennung der Rechenvorrichtung unter Verwendung eines Secure-Tunneling-Mechanismus (112) zwischen dem Security-Agent und dem zweiten Identitäts-Provider beinhaltet; und
das Empfangen der signierten Antwort von dem zweiten Identitäts-Provider das Empfangen der signierten Antwort unter Verwendung des Secure-Tunneling-Mechanismus beinhaltet.

6. Verfahren gemäß Anspruch 1, wobei die signierte Antwort zusätzliche Daten über die Rechenvorrichtung umfasst, die durch den zweiten Identitäts-Provider abgerufen wurden.

7. Verfahren gemäß einem der vorhergehenden Ansprüche, wobei:
die Authentifizierungsanfrage unter Verwendung des Security-Assertion-Markup-Language-Protokolls, SAML-Protokolls, mit der Kennung der Rechenvorrichtung an den zweiten Identitäts-Provider gesendet wird; und
die signierte Antwort einen signierten SAML-Anspruch umfasst.

8. Verfahren gemäß einem der vorhergehenden Ansprüche, wobei die signierte Antwort einen Zeitstempel umfasst, der eine Zeit angibt, zu der der zweite Identitäts-Provider die signierte Antwort mit einem privaten Schlüssel, auf den der zweite Identitäts-Provider zugreifen kann, signiert hat.

9. Verfahren gemäß einem der vorhergehenden Ansprüche, wobei das Empfangen des Ergebnisses der Authentifizierungsanfrage von dem ersten Identitäts-Provider mindestens eines von Folgendem beinhaltet:
Empfangen einer Angabe, dass der Zugriff auf eine Ressource gewährt wurde;
Empfangen einer Angabe, dass der Zugriff auf die Ressource verweigert wurde;
Empfangen einer Aufforderung zur Multifaktor-Authentifizierung; oder
Empfangen einer Angabe, dass der Zugriff auf die Ressource verweigert wurde und
dass der Zugriff auf eine andere Ressource gewährt wurde.

10. Eine Rechenvorrichtung, die Folgendes beinhaltet:
einen oder mehrere Prozessoren; und
einen Speicher, der durch einen Computer ausführbare Anweisungen speichert, die,
wenn sie von dem einen oder den mehreren Prozessoren ausgeführt werden, bewirken, dass die Rechenvorrichtung das Verfahren gemäß einem der vorhergehenden Ansprüche verrichtet.

11. Ein Verfahren, das Folgendes beinhaltet:
Empfangen, durch einen zweiten Identitäts-Provider (108), einer Authentifizierungsanfrage von einer Rechenvorrichtung (102), wobei die Authentifizierungsanfrage durch einen ersten Identitäts-Provider (106) an den zweiten Identitäts-Provider weitergeleitet wurde;
Signieren, durch den zweiten Identitäts-Provider, einer Antwort auf die Authentifizierungsanfrage, um eine signierte Antwort zu erhalten; und
Senden, durch den zweiten Identitäts-Provider, der signierten Antwort an die Rechenvorrichtung;
wobei, wenn die Authentifizierungsanfrage ohne eine Kennung der Rechenvorrichtung empfangen wird, die signierte Antwort eine Angabe umfasst, dass ein Security-Agent (114), der durch den zweiten Identitäts-Provider verwaltet wird, auf der Rechenvorrichtung nicht installiert ist, oder wobei:
die Authentifizierungsanfrage mit einer Kennung der Rechenvorrichtung empfangen wird;
die Authentifizierungsanfrage via einen Security-Agent, der auf der Rechenvorrichtung ausgeführt wird, empfangen wird;
das Verfahren ferner das Validieren der Kennung beinhaltet, indem bestätigt wird, dass die Kennung eine einer Vielzahl von Kennungen ist, die mit Security-Agents assoziiert sind, die auf Rechenvorrichtungen installiert wurden; und
die signierte Antwort die Kennung der Rechenvorrichtung umfasst.

12. Verfahren gemäß Anspruch 11, wobei die Kennung der Rechenvorrichtung eine Kennung des Security-Agent beinhaltet oder
wobei:
das Empfangen der Authentifizierungsanfrage mit der Kennung der Rechenvorrichtung von der Rechenvorrichtung das Empfangen der Authentifizierungsanfrage mit der Kennung der Rechenvorrichtung unter Verwendung eines Secure-Tunneling-Mechanismus (112) zwischen dem Security-Agent (114) und dem zweiten Identitäts-Provider beinhaltet; und
das Senden der signierten Antwort an die Rechenvorrichtung das Senden der signierten Antwort unter Verwendung des Secure-Tunneling-Mechanismus (112) beinhaltet.

13. Verfahren gemäß einem der Ansprüche 11 bis 12, das ferner Folgendes beinhaltet:
Empfangen, durch den zweiten Identitäts-Provider, einer Abfrage von dem ersten Identitäts-Provider nach zusätzlichen Daten über die Rechenvorrichtung; und
Senden, durch den zweiten Identitäts-Provider, der zusätzlichen Daten an den ersten Identitäts-Provider,
wobei die zusätzlichen Daten mindestens eines von Folgendem angeben:
eine Version eines Betriebssystems, OS, der Rechenvorrichtung;
eine Kompatibilität der Rechenvorrichtung;
eine Richtlinienebene des Security-Agent;
Benutzerinformationen über einen Benutzer der Rechenvorrichtung;
eine Stärke eines mit dem Benutzer assoziierten Passworts;
einen mit der Authentifizierungsanfrage assoziierten Standort;
mit der Authentifizierungsanfrage assoziierte Proxy-Informationen;
ob ein Sicherheitsmerkmal auf der Rechenvorrichtung aktiviert ist; oder
ob die Rechenvorrichtung mit einem Sicherheitsvorfall in Zusammenhang stand.

14. Ein Computer, der Folgendes beinhaltet:
einen oder mehrere Prozessoren; und
einen Speicher, der durch einen Computer ausführbare Anweisungen speichert, die, wenn sie von dem einen oder den mehreren Prozessoren ausgeführt werden, bewirken, dass die Rechenvorrichtung das Verfahren gemäß einem der Ansprüche 11 bis 13 verrichtet.

## Revendications

1. Un procédé comprenant :
l'envoi, par un dispositif informatique, d'une demande d'authentification à un premier fournisseur d'identité (106) ;
la réception, par le dispositif informatique, en provenance du premier fournisseur d'identité, de données de redirection pour rediriger la demande d'authentification vers un deuxième fournisseur d'identité (108) ;
lorsque le dispositif informatique a un agent de sécurité (114) installé,
l'interception, par un agent de sécurité (114) s'exécutant sur le dispositif informatique (102), de la demande d'authentification ;
la récupération, par l'agent de sécurité, d'un identifiant du dispositif informatique ; l'envoi, par l'agent de sécurité, de la demande d'authentification avec l'identifiant du dispositif informatique au deuxième fournisseur d'identité ;
la réception, par le dispositif informatique, en provenance du deuxième fournisseur d'identité, d'une réponse signée à la demande d'authentification, la réponse signée incluant l'identifiant du dispositif informatique ;
lorsque le dispositif informatique n'a pas d'agent de sécurité (114) installé,
l'envoi, par le dispositif informatique, de la demande d'authentification au deuxième fournisseur d'identité ;
la réception, par le dispositif informatique, en provenance du deuxième fournisseur d'identité, d'une réponse signée à la demande d'authentification ;
l'envoi, par le dispositif informatique, de la réponse signée au premier fournisseur d'identité ; et
la réception, par le dispositif informatique, d'un résultat de la demande d'authentification en provenance du premier fournisseur d'identité ;
dans lequel la réponse signée inclut une indication du fait qu'un agent de sécurité géré par le deuxième fournisseur d'identité n'est pas installé sur le dispositif informatique, ou,
dans lequel la demande d'authentification est envoyée par l'intermédiaire d'un agent de sécurité s'exécutant sur le dispositif informatique pour la validation de l'identifiant par confirmation, au niveau du deuxième fournisseur d'identité (108), du fait que l'identifiant est un identifiant parmi une pluralité d'identifiants associés à des agents de sécurité qui ont été installés sur des dispositifs informatiques.

2. Le procédé de la revendication 1, dans lequel l'identifiant du dispositif informatique comprend un identifiant de l'agent de sécurité.

3. Le procédé de la revendication 1 ou de la revendication 2, dans lequel :
les données de redirection comprennent un localisateur uniforme de ressource, URL (*Uniform Resource Locator*)*,* géré par le deuxième fournisseur d'identité ;
en réponse au fait qu'un navigateur du dispositif informatique est dirigé vers l'URL, l'URL se résout en un hôte local (*localhost*) associé au dispositif informatique ; et
dans lequel l'interception de la demande d'authentification par l'agent de sécurité est basée au moins en partie sur l'URL se résolvant en l'hôte local.

4. Le procédé de n'importe quelle revendication précédente, comprenant en outre :
la récupération, par l'agent de sécurité, de données supplémentaires concernant le dispositif informatique ; et
l'envoi, par l'agent de sécurité, de la demande d'authentification avec les données supplémentaires au deuxième fournisseur d'identité,
dans lequel les données supplémentaires indiquent au moins un élément parmi :
une version d'un système d'exploitation, OS (*Operating System*), du dispositif informatique ;
une compatibilité du dispositif informatique ;
un niveau de politique de l'agent de sécurité ;
des informations d'utilisateur concernant un utilisateur du dispositif informatique ;
une force d'un mot de passe associé à l'utilisateur;
un emplacement associé à la demande d'authentification ;
des informations de mandataire associées à la demande d'authentification ;
le fait qu'une fonction de sécurité est activée ou non sur le dispositif informatique ; ou
le fait que le dispositif informatique a été impliqué ou non dans un incident de sécurité.

5. Le procédé de n'importe quelle revendication précédente, dans lequel :
l'envoi de la demande d'authentification avec l'identifiant du dispositif informatique au deuxième fournisseur d'identité comprend l'envoi de la demande d'authentification avec l'identifiant du dispositif informatique au moyen d'un mécanisme de tunnellisation sécurisée (112) entre l'agent de sécurité et le deuxième fournisseur d'identité ; et
la réception de la réponse signée en provenance du deuxième fournisseur d'identité comprend la réception de la réponse signée au moyen du mécanisme de tunnellisation sécurisée.

6. Le procédé de la revendication 1, dans lequel la réponse signée inclut des données supplémentaires concernant le dispositif informatique récupérées par le deuxième fournisseur d'identité.

7. Le procédé de n'importe quelle revendication précédente, dans lequel :
la demande d'authentification est envoyée avec l'identifiant du dispositif informatique au deuxième fournisseur d'identité au moyen du protocole de langage de balisage d'assertion de sécurité, SAML (*Security Assertion Markup Language*) ; et
la réponse signée inclut une revendication SAML signée.

8. Le procédé de n'importe quelle revendication précédente, dans lequel la réponse signée inclut une estampille temporelle indiquant un instant auquel le deuxième fournisseur d'identité a signé la réponse signée avec une clé privée accessible au deuxième fournisseur d'identité.

9. Le procédé de n'importe quelle revendication précédente, dans lequel la réception du résultat de la demande d'authentification en provenance du premier fournisseur d'identité comprend au moins une opération parmi :
la réception d'une indication du fait que l'accès à une ressource a été accordé ;
la réception d'une indication du fait que l'accès à la ressource a été refusé ;
la réception d'une invite d'authentification multifacteur ; ou
la réception d'une indication du fait que l'accès à la ressource a été refusé, et que l'accès à une autre ressource a été accordé.

10. Un dispositif informatique comprenant :
un ou plusieurs processeurs ; et
de la mémoire stockant des instructions exécutables par ordinateur qui, lorsqu'elles sont exécutées par les un ou plusieurs processeurs, amènent le dispositif informatique à mettre en œuvre le procédé de n'importe quelle revendication précédente.

11. Un procédé comprenant :
la réception, par un deuxième fournisseur d'identité (108), d'une demande d'authentification en provenance d'un dispositif informatique (102), la demande d'authentification ayant été redirigée vers le deuxième fournisseur d'identité par un premier fournisseur d'identité (106) ;
la signature, par le deuxième fournisseur d'identité, d'une réponse à la demande d'authentification pour obtenir une réponse signée ; et
l'envoi, par le deuxième fournisseur d'identité, de la réponse signée au dispositif informatique ;
dans lequel lorsque la demande d'authentification est reçue sans identifiant du dispositif informatique, la réponse signée inclut une indication du fait qu'un agent de sécurité (114) géré par le deuxième fournisseur d'identité n'est pas installé sur le dispositif informatique, ou, dans lequel :
la demande d'authentification est reçue avec un identifiant du dispositif informatique ;
la demande d'authentification est reçue par l'intermédiaire d'un agent de sécurité s'exécutant sur le dispositif informatique ;
le procédé comprend en outre la validation de l'identifiant par confirmation du fait que l'identifiant est un identifiant parmi une pluralité d'identifiants associés à des agents de sécurité qui ont été installés sur des dispositifs informatiques ; et
la réponse signée inclut l'identifiant du dispositif informatique.

12. Le procédé de la revendication 11, dans lequel l'identifiant du dispositif informatique comprend un identifiant de l'agent de sécurité, ou
dans lequel :
la réception de la demande d'authentification avec l'identifiant du dispositif informatique en provenance du dispositif informatique comprend la réception de la demande d'authentification avec l'identifiant du dispositif informatique au moyen d'un mécanisme de tunnellisation sécurisée (112) entre l'agent de sécurité (114) et le deuxième fournisseur d'identité ; et
l'envoi de la réponse signée au dispositif informatique comprend l'envoi de la réponse signée au moyen du mécanisme de tunnellisation sécurisée (112).

13. Le procédé de n'importe laquelle des revendications 11 à 12, comprenant en outre :
la réception, par le deuxième fournisseur d'identité, d'une requête en provenance du premier fournisseur d'identité pour des données supplémentaires concernant le dispositif informatique ; et
l'envoi, par le deuxième fournisseur d'identité, des données supplémentaires au premier fournisseur d'identité,
dans lequel les données supplémentaires indiquent au moins un élément parmi :
une version d'un système d'exploitation, OS, du dispositif informatique ;
une compatibilité du dispositif informatique ;
un niveau de politique de l'agent de sécurité ;
des informations d'utilisateur concernant un utilisateur du dispositif informatique ;
une force d'un mot de passe associé à l'utilisateur;
un emplacement associé à la demande d'authentification ;
des informations de mandataire associées à la demande d'authentification ;
le fait qu'une fonction de sécurité est activée ou non sur le dispositif informatique ; ou
le fait que le dispositif informatique a été impliqué ou non dans un incident de sécurité.

14. Un ordinateur comprenant :
un ou plusieurs processeurs ; et
de la mémoire stockant des instructions exécutables par ordinateur qui, lorsqu'elles sont exécutées par les un ou plusieurs processeurs, amènent le dispositif informatique à mettre en œuvre le procédé de n'importe laquelle des revendications 11 à 13.
